# EUROPEAN PATENT SPECIFICATION

(11) **EP 3 561 790 B1**
(45) Date of publication and mention of the grant of the patent: **18.08.2021**
(21) Application number: 17884413.0
(22) Date of filing: 18.12.2017
(51) Int. Cl.: G08C 15/06, G01D 21/00, G08C 15/00, G08C 17/02, H04Q 9/00

(54) **SENSOR NODE AND VIBRATION MONITORING SYSTEM**
SENSORKNOTEN UND SYSTEM ZUR ÜBERWACHUNG VON SCHWINGUNGEN
NOEUD DE CAPTEUR ET SYSTÈME DE SURVEILLANCE DE VIBRATION

(30) Priority: 22.12.2016 JP 2016248709
(43) Date of publication of application: 30.10.2019
(73) Proprietor: Alps Alpine Co., Ltd., Tokyo 145-8501 (JP)
(72) Inventor: AOYAGI, Toru, Tokyo 145-8501 (JP)
(74) Representative: Maiwald Patent- und Rechtsanwaltsgesellschaft mbH
(86) International application number: PCT/JP2017/045255
(87) International publication number: WO 2018/117006

(56) References cited:
- JP-A- 2014 146 245
- US-A1- 2013 181 847
- US-A1- 2016 041 539

## Description

### TECHNICAL FIELD

The present invention relates to a sensor node and a vibration monitoring system, and particularly relates to a sensor node and a vibration monitoring system using a radio network system.

### BACKGROUND ART

US 2016/041539 A1 describes a diagnostic device physically coupled to a control device in a process control system and includes an accelerometer that determines when a motion or vibration of the control device is greater than a predetermined threshold.

There exists a system for preventive maintenance where a time of a future failure is predicted by detecting a sign of the failure. For example, there exists a system that detects a failure of a device such as a motor for a pump by monitoring the vibration of the motor or predicts a time of a future failure by detecting a sign of the failure.

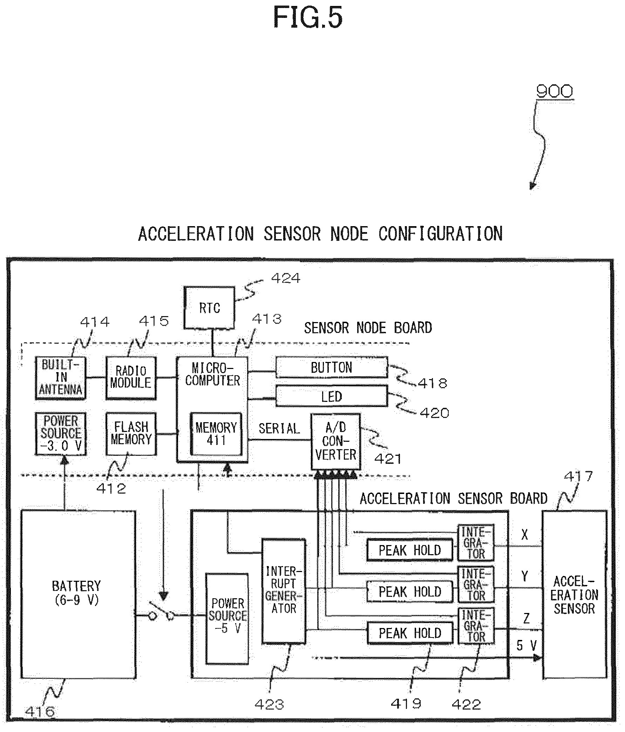

Also, in recent years, a monitoring system using a radio network system has been developed. In the monitoring system, sensors are attached to facilities and piping, and the facilities and the piping are continuously monitored via the sensors and the radio network system. Using a radio network system eliminates the need to manually measure vibration at periodic inspections. Patent Document 1 discloses a sensor node 900, which is an example of such a monitoring system, and a sensor network system. FIG. 5 illustrates the sensor node 900.

The sensor node 900 includes a sensor 417 that measures a physical quantity of a measurement target, a controller that samples the physical quantity measured by the sensor 417 at a predetermined frequency to obtain measurement values, and a radio communicator that transmits the measurement values obtained by the controller. The controller includes a detector that detects that the vibration frequency of the measurement values of the measurement target is different from the sampling frequency, and an adjustor that changes the sampling frequency to match the vibration frequency of the measurement target.

Also, the detector identifies the vibration frequency of the measurement target and determines that the vibration frequency is different from the sampling frequency, and the adjustor changes the sampling frequency to a frequency greater than or equal to the identified vibration frequency if the vibration frequency is different from the sampling frequency. That is, the sampling frequency is set at a low value in a normal state and if an anomaly is detected in the measurement target, the sampling frequency is increased to match the vibration frequency of the measurement target.

This makes it possible to correctly measure the vibration of the measurement target and detect an abnormal vibration of the measurement target.

### [RELATED-ART DOCUMENT]

### [Patent Document]

[Patent Document 1] Japanese Laid-Open Patent Publication No. 2009-180648

### DISCLOSURE OF INVENTION

### PROBLEMS TO BE SOLVED BY THE INVENTION

In the sensor network system using the sensor node 900 disclosed in Patent Document 1, the sampling frequency is increased when an abnormal frequency is detected in the measurement target, but is kept at a low value in a normal state, i.e., before an anomaly is detected. For this reason, there is a high chance of overlooking an abnormal vibration.

Also, when Bluetooth Low Energy (BLE), which is Bluetooth (registered trademark) version 4.0, is used as the radio network system, because of the slow transfer rate of BLE, it is difficult to transfer data immediately after an abnormal vibration is detected, and the volume of data that can be transferred at a time is small.

The present invention is made in view of the above problems of the related-art technologies. One object of the present invention is to provide a sensor node and a vibration monitoring system that are unlikely to overlook an abnormal vibration when an anomaly occurs and that can transfer data immediately after the anomaly occurs.

### MEANS FOR SOLVING THE PROBLEMS

The invention is defined in the appended claims.

To solve the above problems, a sensor node of the present invention includes an acceleration sensor that measures a vibration characteristic of a monitoring target, a memory that stores data measured by the acceleration sensor, a sensor node radio communicator that communicates with a command center, and a sensor node controller that controls the acceleration sensor, the memory, and the sensor node radio communicator. The sensor node controller sends a detection signal indicating a detection of an abnormal vibration via the sensor node radio communicator to the command center immediately after the acceleration sensor detects the abnormal vibration; after sending the detection signal, causes the acceleration sensor to newly measure the vibration characteristic of the monitoring target and stores the measured acceleration data as stored data in the memory; and in response to a stored data transfer request from the command center, transfers the stored data via the sensor node radio communicator to the command center.

The sensor node configured as described above sends a detection signal to the command center when the acceleration sensor detects an abnormal vibration and transfers stored data to the command center immediately after sending the detection signal and receiving a stored data transfer request. Thus, the sensor node can send data to the command center at substantially the same time as the abnormal vibration occurs. Also, because the sampling frequency can be set at a high value even in a normal state, the sensor node is unlikely to overlook an abnormal vibration.

In the above configuration, after the stored data transfer request is received from the command center, the sensor node controller does not perform any process other than the transfer of the stored data to the command center.

The sensor node with this configuration can concentrate on transferring the stored data to the command center and therefore can increase the volume of data to be transferred.

Also in the above configuration, the sensor node may further include at least one other sensor that measures a characteristic of the monitoring target other than the vibration characteristic. After the stored data is transferred and until a normal-data-acquisition start request is received from the command center, the sensor node controller does not cause the other sensor to measure the characteristic, causes only the acceleration sensor to measure the vibration characteristic, and transfers the acceleration data obtained by the measurement to the command center.

The sensor node configured as described above can measure data with the acceleration sensor and transfer the measured data even after the stored data is transferred, and therefore can transfer a larger amount of data that is necessary for a data analysis performed by the command center.

To solve the above problems, a vibration monitoring system of the present invention includes a sensor node and a command center. The sensor node includes an acceleration sensor that measures a vibration characteristic of a monitoring target, a memory that stores data measured by the acceleration sensor, a sensor node radio communicator that communicates with the command center, and a sensor node controller that controls the acceleration sensor, the memory, and the sensor node radio communicator. The command center includes a command center radio communicator that communicates with the sensor node, and a command center controller that controls the command center radio communicator. The sensor node controller sends a detection signal indicating a detection of an abnormal vibration via the sensor node radio communicator to the command center immediately after the acceleration sensor detects the abnormal vibration, and after sending the detection signal, causes the acceleration sensor to newly measure the vibration characteristic of the monitoring target and stores the measured acceleration data as stored data in the memory. After receiving the detection signal, the command center stops receiving data from the sensor node and sends a stored data transfer request signal to the sensor node. Upon receiving the stored data transfer request signal, the sensor node transfers the stored data via the sensor node radio communicator to the command center.

In the vibration monitoring system configured as described above, the sensor node sends a detection signal to the command center when the acceleration sensor detects an abnormal vibration and transfers stored data to the command center immediately after sending the detection signal and receiving a stored data transfer request. Thus, the sensor node can send data to the command center at substantially the same time as the abnormal vibration occurs. Also, because the sampling frequency can be set at a high value even in a normal state, the sensor node is unlikely to overlook an abnormal vibration.

In the above configuration, after receiving the stored data, the command center performs a data analysis to determine a subsequent process, and sends a normal-data-acquisition start request to the sensor node.

In the vibration monitoring system configured as described above, after determining a subsequent process, the command center can easily restore the sensor node to an initial state by sending the normal-data-acquisition start request to the sensor node.

Also in the above configuration, the sensor node radio communicator and the command center radio communicator are compliant with the BLE standard.

In the vibration monitoring system configured as described above, because the sensor node radio communicator and the command center radio communicator are compliant with the BLE standard, it is possible to construct a system with a low cost and perform energy-efficient communications.

### ADVANTAGEOUS EFFECT OF THE INVENTION

With a sensor node and a vibration monitoring system of the present invention, the sensor node sends a detection signal to a command center when an abnormal vibration is detected by an acceleration sensor and transfers stored data to the command center immediately after sending the detection signal and receiving a stored data transfer request. Thus, the present invention makes it possible to send data to the command center at substantially the same time as the abnormal vibration occurs. Also, the present invention makes it possible to set a sampling frequency at a high value even in a normal state, and thereby makes it possible to reduce the chance of overlooking an abnormal vibration.

### BRIEF DESCRIPTION OF THE DRAWINGS

FIG. 1 is a block diagram illustrating a configuration of a vibration monitoring system according to the present invention;
FIG. 2 is a first half of a flowchart illustrating a process performed by a sensor node;
FIG. 3 is a second half of the flowchart illustrating the process performed by the sensor node;
FIG. 4 is a flowchart illustrating a process performed by a command center; and
FIG. 5 is a block diagram illustrating a configuration of a related-art sensor node.

### DESCRIPTION OF EMBODIMENTS

### <EMBODIMENT>

The present invention is described below with reference to the accompanying drawings. A sensor node 10 and a vibration monitoring system 100 according to an embodiment of the present invention are used for preventive maintenance where a time of a future failure is predicted by detecting a sign of the failure. For example, the sensor node and the vibration monitoring system monitor a vibration characteristic of a monitoring target such as a motor for a pump. The sensor node and the vibration monitoring system of the present invention are not limited to those described in the embodiment below, and modifications may be made as necessary.

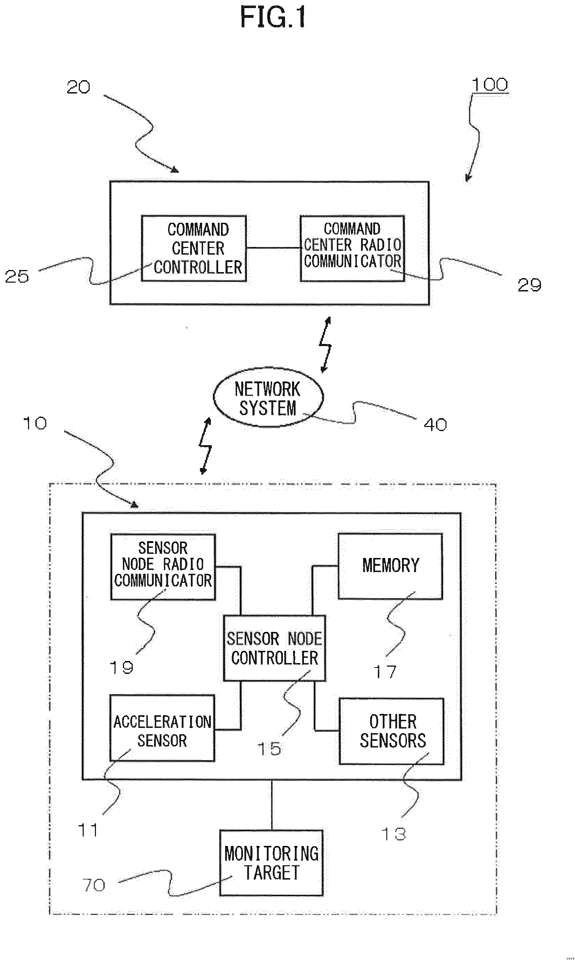

First, configurations of the sensor node 10 and the vibration monitoring system 100 according to an embodiment of the present invention are described below with reference to FIG. 1. FIG. 1 is a block diagram illustrating an exemplary configuration of the vibration monitoring system 100 according to an embodiment of the present invention.

As illustrated in FIG. 1, the vibration monitoring system 100 includes the sensor node 10 and a command center 20 that are wirelessly connected to each other via a network system 40.

The sensor node 10 includes an acceleration sensor 11 that is a motion sensor for measuring a vibration characteristic of a monitoring target 70, one or more other sensors 13 for measuring properties of the monitoring target 70 other than vibration, a memory 17 for storing information such as data measured by the acceleration sensor 11, a sensor node radio communicator 19 for communicating with the command center 20, and a sensor node controller 15 that is connected to and controls the above components of the sensor node 10.

The acceleration sensor 11 and the other sensors 13 are attached to the monitoring target 70 to measure the vibration and environmental conditions around the monitoring target 70. The acceleration sensor 11 can detect the vibration of the monitoring target 70 as changes in acceleration, and acceleration data DA1 indicating the detected acceleration is obtained by the sensor node controller 15.

The other sensors 13 include, for example, a temperature sensor, a humidity sensor, an illuminance sensor, a UV sensor, a barometric sensor, and a geomagnetic sensor. The temperature sensor, the humidity sensor, the illuminance sensor, the UV sensor, and the barometric sensor are treated as environmental sensors and can detect various environmental conditions. Similarly to the acceleration sensor 11, the geomagnetic sensor is treated as a motion sensor.

In a normal state, various types of data detected and obtained by the acceleration sensor 11 and the other sensors 13 are transmitted from the sensor node radio communicator 19 via the network system 40 to the command center 20 at data transfer timings predetermined for the respective sensors. In the normal state, the obtained data is not stored in the memory 17 of the sensor node 10. The memory 17 is used when an anomaly occurs in the vibration characteristic of the monitoring target 70.

The measurement of vibration by the acceleration sensor 11 is performed at a predetermined sampling frequency. The sampling frequency is normally set at a value that is greater than or equal to a frequency corresponding to the data transfer timing. Because the obtained data is not normally stored in the memory 17, the obtained data is not transferred immediately at a timing other than the data transfer timing.

The command center 20 includes a command center radio communicator 29 for communicating with the sensor node 10 and a command center controller 25 for controlling the command center radio communicator 29.

As the network system 40 for wirelessly connecting the sensor node 10 and the command center 20 to each other, Bluetooth Low Energy (BLE), which is Bluetooth (registered trademark) version 4.0, is used. Accordingly, the sensor node radio communicator 19 of the sensor node 10 and the command center radio communicator 29 of the command center 20 are compliant with the BLE standard. Also, the transfer rate at the data transfer timing is set at a predetermined rate.

BLE makes it possible to construct a system with a low cost and is very energy efficient. However, compared with, for example, wireless local area network (LAN), the transmission speed of BLE is very slow. That is, the volume of data that can be transmitted or received at a time is small. Therefore, with BLE, continuous communication is not possible, and data needs to be intermittently transmitted or received.

For the above reasons, in a normal state, various types of data obtained by the acceleration sensor 11 and the other sensors 13 are transferred to the command center 20 at data transfer timings necessary for the respective sensors.

For example, the acceleration data DA1 obtained by the acceleration sensor 11 is transferred at a normal acceleration data transfer timing T01 (once per 10 msec), and other data DA2 obtained by the other sensors 13 is transmitted at a normal other data transfer timing T02 (once per 1 sec). When the other data transfer timing T02 coincides with the acceleration data transfer timing T01, the acceleration data DA1 and the other data DA2 are transferred at the same time.

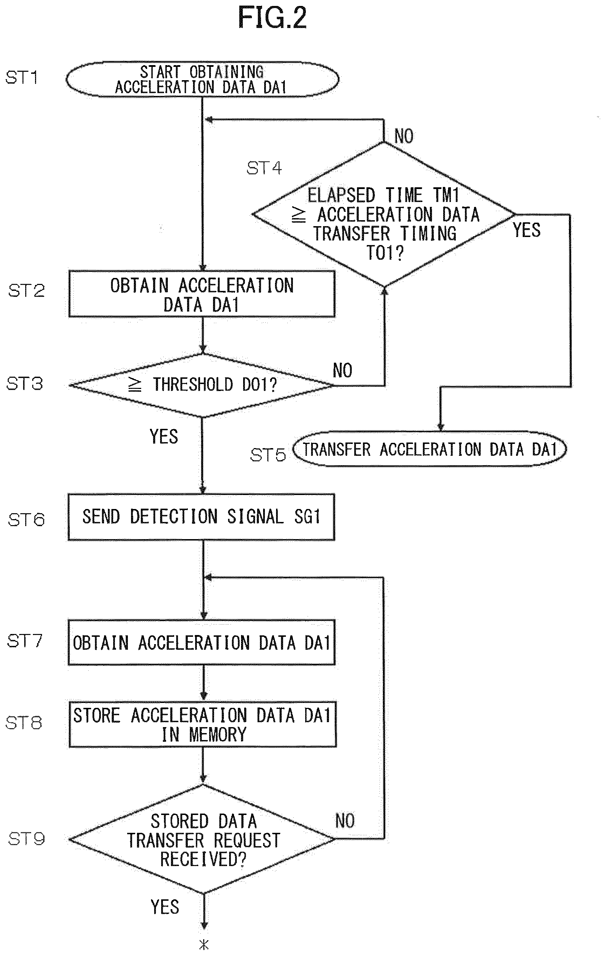

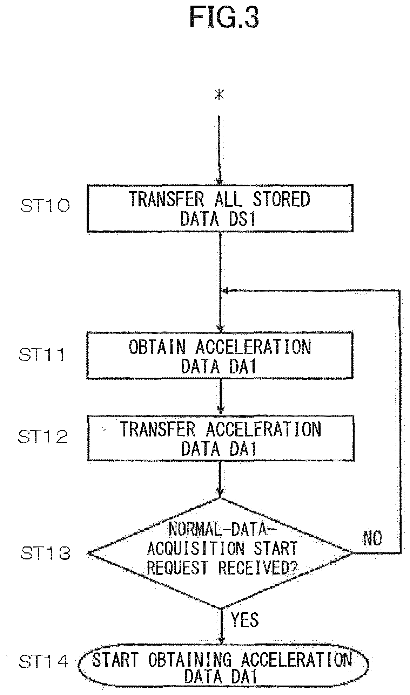

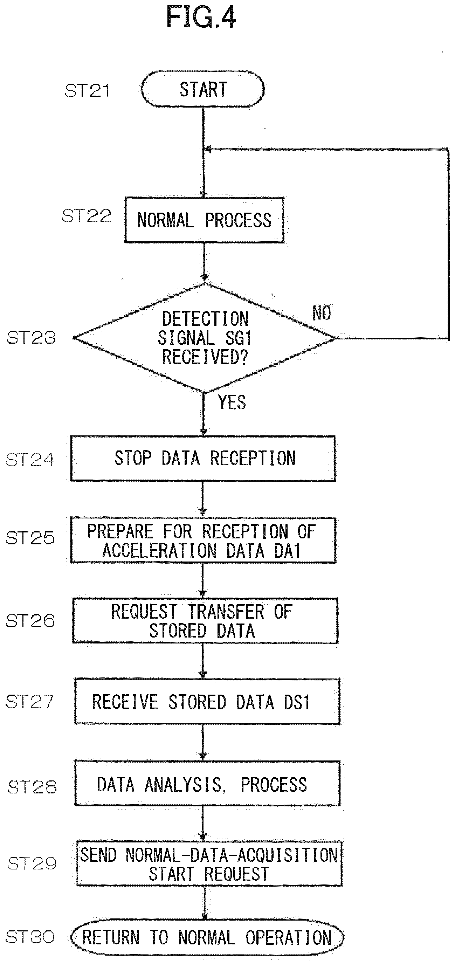

Next, communications between the sensor node 10 and the command center 20 in the vibration monitoring system 100 are described with reference to FIGs. 2 through 4. FIG. 2 is a first half of a flowchart illustrating a process performed by the sensor node 10, and FIG. 3 is a second half of the flowchart illustrating the process performed by the sensor node 10. FIG. 4 is a flowchart illustrating a process performed by the command center 20. In FIGs. 2 and 3, steps in the flowchart are referred to as ST1 through ST14. In FIG. 4, steps in the flowchart are referred to as ST21 through ST30.

First, the process performed by the sensor node 10 is described with reference to FIGs. 2 and 3. In the first half of the flowchart illustrated by FIG. 2, at ST1, the acceleration data DA1 of the monitoring target 70 starts to be obtained by the acceleration sensor 11. Accordingly, the start time at ST1 becomes the reference time of an elapsed time TM1 after the acquisition of the acceleration data DA1 is started.

Then, the acceleration sensor 11 attached to the monitoring target 70 obtains the acceleration data DA1 at a predetermined sampling frequency (ST2). Also, at the same time, the other sensors 13 obtain various types of other data DA2 at the corresponding sampling frequencies. Below, unless necessary, descriptions of the other sensors 13 are omitted.

Next, at ST3, whether the obtained acceleration data DA1 is greater than or equal to a predetermined acceleration data threshold D01 is determined. The acceleration data threshold D01 is a set value that is applied when the acceleration increases as a result of an occurrence of an abnormal vibration that is different from a normal vibration. That is, at ST3, whether the acceleration data DA1 is an abnormal value is determined. If the acceleration data DA1 is not greater than or equal to the predetermined threshold, i.e., if the acceleration data DA1 is a normal value, the process proceeds to ST4. If the acceleration data DA1 is greater than or equal to the predetermined threshold, i.e., if the acceleration data DA1 is an abnormal value, the process proceeds to ST6.

If the acceleration data DA1 is a normal value and the process proceeds to ST4, whether the elapsed time TM1 after the start of acceleration data acquisition has reached the normal acceleration data transfer timing T01, e.g., 10 msec, is determined. If the elapsed time TM1 has not reached the acceleration data transfer timing T01, the process returns to ST2, and acquisition of the acceleration data DA1 is performed and continued until the elapsed time TM1 reaches the acceleration data transfer timing T01. If the elapsed time TM1 has reached the acceleration data transfer timing T01, the process proceeds to ST5. When the process proceeds to ST5, the acceleration data DA1 obtained at this timing is transferred to the command center 20.

At ST3, when the obtained acceleration data DA1 is greater than or equal to the predetermined acceleration data threshold D01, the process proceeds to ST6. When the process proceeds to ST6, i.e., immediately after the acceleration sensor 11 detects an abnormal vibration, the sensor node controller 15 sends a detection signal SG1 indicating the detection of the abnormal vibration via the sensor node radio communicator 19 to the command center 20.

The sensor node controller 15 stops controlling the other sensors 13 after sending the detection signal SG1 to the command center 20. As a result, the transfer of the other data DA2 obtained by the other sensors 13 is stopped.

Then, the process proceeds to ST7 where the acceleration sensor 11 newly measures the vibration characteristic of the monitoring target 70 to obtain acceleration data DA1, and stores the obtained acceleration data DA1 as stored data DS1 in the memory 17 (ST8).

Next, at ST9, whether a stored data transfer request has been received from the command center 20 is determined. If the stored data transfer request has not been received from the command center 20, the process returns to ST7, and the sensor node 10 continues to obtain and store the acceleration data DA1 in the memory 17 (ST8).

If the stored data transfer request has been received from the command center 20, as illustrated in FIG. 3, the process proceeds to ST10 where all the stored data DS1 stored in the memory 17 is transferred via the sensor node radio communicator 19 to the command center 20. Here, after the stored data transfer request is received from the command center 20, the sensor node 10 does not perform any process other than the transfer of the stored data DS1 to the command center 20. That is, the sensor node 10 concentrates on transferring the stored data DS1.

After the transfer of the stored data DS1 is completed, the sensor node 10 obtains acceleration data DA1 (ST11). At this step, the sensor node 10 does not perform any process other than the obtaining of the acceleration data DA1. Then, the sensor node 10 transfers the acceleration data DA1 at the acceleration data transfer timing T01, e.g., once per 10 msec, to the command center 20 (ST12).

Then, at ST13, whether a normal-data-acquisition start request has been received from the command center 20 is determined. If the normal-data-acquisition start request has not been received from the command center 20, the process returns to ST11, and the sensor node 10 continues to obtain and transfer the acceleration data DA1 (ST12). The acquisition and the transfer of the acceleration data DA1 are repeated an unlimited number of times unless the normal-data-acquisition start request is received from the command center 20.

If the normal-data-acquisition start request has been received from the command center 20, the process proceeds to ST14, and the sensor node 10 starts normal acquisition of the acceleration data DA1. That is, the process returns to ST1.

Next, a process performed by the command center 20 is described with reference to FIG. 4. In the flowchart of FIG. 4, the entire process is started (ST21), and a normal process is performed (ST22). At ST22, the command center 20 receives, via the command center radio communicator 29, the acceleration data DA1 transferred from the sensor node 10 in the normal state at ST5 in FIG. 2 and the other data DA2 of the other sensors 13.

Then, at ST23, the command center controller 25 determines whether the detection signal SG1 sent from the sensor node 10 at ST6 in FIG. 2 has been received by the command center radio communicator 29. If the detection signal SG1 has not been received from the sensor node 10, the command center controller 25 returns to ST22 and continues the normal process.

If the detection signal SG1 has been received from the sensor node 10, the command center controller 25 proceeds to ST24. At ST24, the command center controller 25 stops receiving the acceleration data DA1 and the other data DA2 from the sensor node 10. Then, the command center controller 25 makes a preparation for receiving the acceleration data DA1 from the sensor node (ST25).

At ST25, the command center controller 25 stops all processes, such as processes related to the other data DA2, other than a process for obtaining the acceleration data DA1 to maximize the processing capacity. That is, the command center controller 25 makes a preparation to increase the amount of the stored data DS1 of the acceleration data DA1 that can be obtained.

Next, the command center controller 25 requests the sensor node 10 to transfer the stored data DS1 stored in the memory 17 (ST26), and receives the stored data DS1 (ST27). After receiving the stored data DS1, the command center 20 performs a data analysis to determine a subsequent process (ST28).

At ST28, the command center 20 performs a data analysis taking into account not only the received stored data DS1 but also the acceleration data DA1 transferred at ST12 in FIG. 3. Then, based on the data analysis result, the command center 20 determines a process to be performed on the monitoring target 70, and perform the determined process on the monitoring target 70.

If it is determined that no particular process needs to be performed on the monitoring target 70, the command center 20 sends a normal-data-acquisition start request to the sensor node 10 (ST29). Then, the command center 20 returns to a normal operation (ST30).

Next, effects of the present embodiment are described.

The sensor node 10 sends the detection signal SG1 to the command center 20 when an abnormal vibration is detected by the acceleration sensor 11, and transfers the stored data DS1 to the command center 20 immediately after sending the detection signal SG1 and receiving a stored data transfer request. Thus, the sensor node 10 can send data to the command center 20 at substantially the same time as the abnormal vibration occurs. Also, because the sampling frequency can be set at a high value even in a normal state, the sensor node 10 is unlikely to overlook an abnormal vibration.

Also, the sensor node 10 can concentrate on transferring the stored data DS1 to the command center 20 and therefore can increase the volume of data to be transferred.

Also, the sensor node 10 can measure data with the acceleration sensor 11 and transfer the measured data even after the stored data DS1 is transferred, and therefore can transfer a larger amount of data that is necessary for a data analysis performed by the command center 20.

The sensor node 10 sends the detection signal SG1 to the command center 20 when an abnormal vibration is detected by the acceleration sensor 11, and transfers the stored data DS1 to the command center 20 immediately after sending the detection signal SG1 and receiving a stored data transfer request. Thus, the sensor node 10 can send data to the command center 20 at substantially the same time as the abnormal vibration occurs. Also, because the sampling frequency can be set at a high value even in a normal state, the sensor node 10 is unlikely to overlook an abnormal vibration.

Also, after determining a subsequent process, the command center 20 can easily restore the sensor node 10 to an initial state by sending the normal-data-acquisition start request to the sensor node 10.

Also, because the sensor node radio communicator 19 and the command center radio communicator 29 are compliant with the BLE standard, it is possible to construct a system with a low cost and perform energy-efficient communications.

As described above, in the sensor node and the vibration monitoring system of the present invention, a detection signal is sent to the command center when an abnormal vibration is detected by the acceleration sensor, and stored data is transferred to the command center immediately after the detection signal is sent and a stored data transfer request is received. Thus, the present invention makes it possible to send data to the command center at substantially the same time as the abnormal vibration occurs. Also, because the sampling frequency can be set at a high value even in a normal state, the sensor node is unlikely to overlook an abnormal vibration.

A sensor node and a vibration monitoring system according to the embodiment of the present invention are described above. However, the present invention is not limited to the specifically disclosed embodiment, and variations and modifications may be made without departing from the scope of the present invention.

### EXPLANATION OF REFERENCE NUMERALS

- 10: Sensor node
- 11: Acceleration sensor
- 13: Other sensors
- 15: Sensor node controller
- 17: Memory
- 19: Sensor node radio communicator
- 20: Command center
- 25: Command center controller
- 29: Command center radio communicator
- 40: Network system
- 70: Monitoring target
- 100: Vibration monitoring system
- SG1: Detection signal
- DA1: Acceleration data
- D01: Acceleration data threshold
- DS1: Stored data
- TM1: Elapsed time
- T01: Acceleration data transfer timing

## Claims

1. A sensor node (10), comprising:
an acceleration sensor (11) configured for measuring a vibration characteristic of a monitoring target;
a memory configured for storing data measured by the acceleration sensor (11);
a sensor node radio communicator (19) configured for communicating with a command center (20); and
a sensor node controller (15) configured for controlling the acceleration sensor, the memory, and the sensor node radio communicator,
wherein the sensor node controller (15) is configured for
sending a detection signal indicating a detection of an abnormal vibration via the sensor node radio communicator to the command center immediately after the acceleration sensor detects the abnormal vibration,
after sending the detection signal, causing the acceleration sensor (11) to newly measure the vibration characteristic of the monitoring target and for storing the measured acceleration data as stored data in the memory, and
in response to a stored data transfer request from the command center (20), transferring the stored data via the sensor node radio communicator (19) to the command center.

2. The sensor node (10) as claimed in claim 1, wherein after the stored data transfer request is received from the command center (20), the sensor node controller (15) does not perform any process other than the transfer of the stored data to the command center.

3. The sensor node (10) as claimed in claim 2, further comprising:
at least one other sensor configured for measuring a characteristic of the monitoring target other than the vibration characteristic,
wherein after the stored data is transferred and until a normal-data-acquisition start request is received from the command center (20), the sensor node controller (15) does not cause the other sensor to measure the characteristic, is configured for causing only the acceleration sensor (11) to measure the vibration characteristic, and configured for transferring the acceleration data obtained by the measurement to the command center.

4. A vibration monitoring system, comprising:
a sensor node (10); and
a command center (20), wherein
the sensor node includes
an acceleration sensor (11) configured for measuring a vibration characteristic of a monitoring target,
a memory configured for storing data measured by the acceleration sensor,
a sensor node radio communicator (19) configured for communicating with the command center, and
a sensor node controller (15) configured for controlling the acceleration sensor, the memory, and the sensor node radio communicator;
the command center (20) includes
a command center radio communicator (29) configured for communicating with the sensor node (10), and
a command center controller (25) configured for controlling the command center radio communicator;
the sensor node controller (15) being configured for
sending a detection signal indicating a detection of an abnormal vibration via the sensor node radio communicator (19) to the command center immediately after the acceleration sensor detects the abnormal vibration, and
after sending the detection signal, causing the acceleration sensor (11) to newly measure the vibration characteristic of the monitoring target and storing the measured acceleration data as stored data in the memory;
after receiving the detection signal, the command center (20) stops receiving data from the sensor node and sends a stored data transfer request signal to the sensor node (10); and
upon receiving the stored data transfer request signal, the sensor node (10) transfers the stored data via the sensor node radio communicator (19) to the command center.

5. The vibration monitoring system as claimed in claim 4, wherein after receiving the stored data, the command center performs a data analysis to determine a subsequent process, and sends a normal-data-acquisition start request to the sensor node (10).

6. The vibration monitoring system as claimed in claim 4 or 5, wherein the sensor node radio communicator (19) and the command center radio communicator (29) are compliant with a Bluetooth Low Energy (BLE) standard.

## Patentansprüche

1. Sensorknoten (10), aufweisend:
einen Beschleunigungssensor (11), der zur Messung einer Schwingungscharakteristik eines Überwachungsziels eingerichtet ist;
einen Speicher, der zum Speichern der vom Beschleunigungssensor (11) gemessenen Daten eingerichtet ist;
einen Sensorknoten-Funkkommunikator (19), der für die Kommunikation mit einer Kommandozentrale (20) eingerichtet ist;
und
einen Sensorknoten-Controller (15), der für die Steuerung des Beschleunigungssensors, des Speichers und des Funkkommunikators des Sensorknotens eingerichtet ist,
wobei der Sensorknoten-Controller (15) ist eingerichtet zu
Senden des Erkennungssignals, das eine Erkennung einer abnormalen Schwingung anzeigt, über den Funkkommunikator des Sensorknotens an die Kommandozentrale, unmittelbar nachdem der Beschleunigungssensor die abnormale Schwingung erkannt hat,
nach dem Senden des Erkennungssignals, den Beschleunigungssensor (11) zu veranlassen die Schwingungscharakteristik des Überwachungsziels neu zu messen und die gemessenen Beschleunigungsdaten als gespeicherte Daten in dem Speicher abzulegen, und
als Reaktion auf eine Übertragungsanforderung gespeicherter Daten von der Kommandozentrale (20) die gespeicherten Daten über den Sensorknoten-Funkkommunikator (19) an die Kommandozentrale zu übertragen.

2. Sensorknoten (10) nach Anspruch 1, wobei nach dem die Übertragungsanforderung der gespeicherten Daten von der Kommandozentrale (20) empfangen wird, führt der Sensorknoten-Controller (15) keinen anderen Prozess als die Übertragung der gespeicherten Daten an die Kommandozentrale aus.

3. Sensorknoten (10) nach Anspruch 2, ferner aufweisend:
mindestens einen weiteren Sensor, der zur Messung einer Eigenschaft des Überwachungsziel anderes als die Schwingungscharakteristik eingerichtet ist,
wobei nach der Übertragung der gespeicherten Daten und bis zu einer normalen Datenerfassung Startanforderung von der Kommandozentrale (20) empfangen wird, veranlasst der Sensorknoten-Controller (15) den anderen Sensor nicht, die Eigenschaft zu messen,
der Sensorknoten-Controller (15) ist so konfiguriert, dass er nur den Beschleunigungssensor (11) veranlasst, das Schwingungscharakteristik zu messen, und ist so konfiguriert, dass er die durch die Messung erhaltenen Beschleunigungsdaten an die Kommandozentrale überträgt.

4. Schwingungsüberwachungssystem aufweisend:
einen Sensorknoten (10); und
einer Kommandozentrale (20), wobei
der Sensorknoten einen Beschleunigungssensor (11) umfasst, der für die Messung einer Schwingungscharakteristik eines Überwachungsziels konfiguriert ist,
einen Speicher, der für die Speicherung der von der Beschleunigung gemessenen Daten konfiguriert ist,
einen Sensorknoten-Funkkommunikator (19), der für die Kommunikation mit der Kommandozentrale, und
einen Sensorknoten-Controller (15), der für die Steuerung des Beschleunigungssensors, des Speichers und des Sensorknoten-Funkkommunikators eingerichtet ist;
die Kommandozentrale (20) aufweisend
einen Funkkommunikator (29) der Kommandozentrale, eingerichtet mit dem Sensorknoten (10) zu kommunizieren, und
einen Kommandozentrale-Controller (25), der für die Steuerung der Funkkommunikator eingerichtet ist;
der Sensorknoten-Controller (15) ist eingerichtet
Senden einer Erkennungssignal, das eine Erfassung einer abnormalen Schwingung anzeigt, über den Sensorknoten-Funkkommunikator (19) an die Kommandozentrale unmittelbar nachdem der Beschleunigungssensor die abnormale Vibration erfasst, und
nach dem Senden des Erkennungssignals, den Beschleunigungssensor (11) zu veranlassen die Schwingungscharakteristik des Überwachungsziels neu zu messen und die gemessenen Beschleunigungsdaten als gespeicherte Daten in dem Speicher abzulegen;
nach dem Empfang des Erkennungssignals stoppt die Kommandozentrale (20) Daten vom Sensorknoten zu empfangen und ein Anforderungssignal für die gespeicherte Datenübertragung an den Sensorknoten (10) sendet; und
beim Empfang des gespeicherten Datenübertragungs-Anforderungssignals, der Sensorknoten (10) überträgt die gespeicherten Daten über den Sensorknoten-Funkkommunikator (19) an die Kommandozentrale.

5. Schwingungsüberwachungssystem nach Anspruch 4, wobei nach dem Empfang von die gespeicherten Daten, führt die Kommandozentrale eine Datenanalyse durch, um einen Folgeprozess zu bestimmen, und sendet eine Startanforderung für die normale Datenerfassung an den Sensorknoten (10).

6. Schwingungsüberwachungssystem nach Anspruch 4 und 5, wobei der Sensorknoten-Funkkommunikator (19) und der Funkkommunikator der Kommandozentrale (29) einem Bluetooth Low Energy (BLE) Standard entsprechen.

## Revendications

1. Noeud de capteur (10), comprenant :
un capteur d'accélération (11) configuré pour mesurer une caractéristique de vibration d'une cible de surveillance ;
une mémoire configurée pour stocker les données mesurées par le capteur d'accélération (11) ;
un communicateur radio de nœud de capteur (19) configuré pour communiquer avec un centre de commande (20) ;
et
un contrôleur de nœud de capteur (15) configuré pour commander le capteur d'accélération, la mémoire, et le communicateur radio du nœud de capteurs,
dans lequel
le contrôleur de nœud de capteur (15) est configuré pour
envoyer le signal de détection indiquant une détection d'une vibration anormale via le communicateur radio du nœud de capteur au centre de commande immédiatement après que le capteur d'accélération a détecté la vibration anormale,
après l'envoi du signal d'accélération, amener le capteur d'accélération (11) à remesurer la caractéristique de vibration de la cible de surveillance et pour stocker les données d'accélération mesurées en tant que données stockées dans la mémoire, et
en réponse à une demande de transfert de données stockées provenant du centre de commande (20), transférer les données stockées via le communicateur radio de nœud de capteur (19) vers le centre de commande.

2. Nœud de capteur (10) selon la revendication 1, dans lequel, après la réception de la demande de transfert de données stockées est reçue du centre de commande (20), le contrôleur de nœud de capteur (15) n'exécute aucun processus autre que le transfert des données stockées vers le centre de commande.

3. Nœud de capteur (10) selon la revendication 2, comprenant en outre :
au moins un autre capteur configuré pour mesurer une caractéristique de la cible à surveiller autre que la caractéristique de vibration, et
cible de surveillance autre que la caractéristique de vibration,
dans lequel, après le transfert des données stockées et jusqu'à ce qu'une demande de démarrage d'acquisition de données normale est reçue du centre de commande (20), le contrôleur de nœud de capteur (15) n'amène pas l'autre capteur à mesurer la caractéristique, est configuré pour amener uniquement le capteur d'accélération (11) à mesurer la caractéristique de vibration, et configuré pour transférer les données d'accélération obtenues par la mesure au centre de commande.

4. Un système de surveillance des vibrations, comprenant :
un nœud de capteur (10) ; et
un centre de commande (20), dans lequel
le nœud de capteurs comprend
un capteur d'accélération (11) configuré pour mesurer une vibration caractéristique d'une cible de surveillance,
une mémoire configurée pour stocker les données mesurées par l'accélération capteur,
un communicateur radio de nœud de capteur (19) configuré pour communiquer avec le centre de commande, et
un contrôleur de nœud de capteur (15) configuré pour contrôler le
capteur d'accélération, la mémoire et le communicateur du nœud de capteur ;
le centre de commande (20) comprend
un communicateur radio de centre de commande (29) configuré pour communiquer avec le nœud de capteur (10), et
un contrôleur de centre de commande (25) configuré pour commander le communicateur radio du centre de commande ;
le contrôleur de noeud de capteur (15) étant configuré pour
envoyer un signal de détection indiquant une détection d'une vibration anormale via le communicateur radio du nœud de capteur (19) vers le centre de commande immédiatement après que le capteur d'accélération ait détecté la vibration anormale, et
après avoir envoyé le signal de détection,
amener le capteur d'accélération (11) à mesurer à nouveau la caractéristique de vibration de la cible de surveillance et stocker les données d'accélération mesurées dans la mémoire ;
après avoir reçu le signal de détection, le centre de commande (20) s'arrête de recevoir des données du nœud de capteur et envoyer un signal de demande de transfert de données stockées au nœud de capteur (10) ; et
à la réception du signal de demande de transfert de données stockées, le capteur (10) transfère les données stockées via le communicateur radio du nœud de capteur (19) au centre de commande.

5. Système de surveillance des vibrations selon la revendication 4, dans lequel après avoir reçu les données stockées, le centre de commande effectue une analyse des données pour déterminer un processus ultérieur, et envoie une demande de début d'acquisition de données normale au nœud de capteur (10).

6. Système de surveillance de vibrations selon la revendication 4 et 5, dans lequel le communicateur radio du nœud de capteurs (19) et le communicateur radio du centre de commande (29) sont conformes à une norme Bluetooth Low Energy (BLE).
